(19) **Europäisches Patentamt**
**European Patent Office**
**Office européen des brevets**

(11) **EP 3 663 770 A1**

(12) **EUROPÄISCHE PATENTANMELDUNG**

(43) Veröffentlichungstag:
**10.06.2020   Patentblatt 2020/24**

(21) Anmeldenummer: **19211352.0**

(22) Anmeldetag: **25.11.2019**

(51) Int Cl.:
*G01P 5/00* (2006.01)          *G01P 5/02* (2006.01)
*B60W 40/02* (2006.01)          *B60W 50/00* (2006.01)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(30) Priorität: **07.12.2018   DE 102018221265**

(71) Anmelder: **Volkswagen AG**
**38440 Wolfsburg (DE)**

(72) Erfinder:
- **Esatbeyoglu, Enes**
  **38120 Braunschweig (DE)**
- **Cassebaum, Oliver**
  **38448 Wolfsburg (DE)**
- **Nitzke, Hans-Georg**
  **38547 Wettmershagen (DE)**
- **Henn, Michael**
  **38165 Lehre (DE)**

(54) **VERFAHREN UND SYSTEM ZUM ERFASSEN EINES AUF EIN FAHRZEUG EINWIRKENDEN WINDES**

(57)      Die Erfindung betrifft ein Verfahren zum Erfassen eines auf ein Fahrzeug (1) einwirkenden Windes, bei dem Längs- und Quersteuerungsdaten des Fahrzeugs (1) erfasst werden und anhand der Längs- und Quersteuerungsdaten eine Windgeschwindigkeit ($w_y$) und eine Windrichtung ($W_L$) des Windes bestimmt werden.

Insbesondere wird mithilfe von Messwerten der Fahrzeuggeschwindigkeit, des Lenkradeinschlagswinkels und des Lenkmoments auf Grundlage eines physikalischen Modells Und ohne Zuhilfenahme eines Windsensors die Windgeschwindigkeit und Windrichtung bestimmt.

Sie betrifft ferner ein entsprechendes System, umfassend eine Erfassungseinheit (11) zum Erfassen von Längs- und Quersteuerungsdaten des Fahrzeugs (1) und eine Auswertungseinheit (12) zum Bestimmen einer Windgeschwindigkeit ($w_L$) und einer Windrichtung ($W_L$) des Windes anhand der Längs- und Quersteuerungsdaten.

FIG. 2A

EP 3 663 770 A1

FIG. 2B

**Beschreibung**

Die vorliegende Erfindung betrifft ein Verfahren und ein System zum Erfassen eines auf ein Fahrzeug einwirkenden Windes.

Zu den Einflussfaktoren, anhand derer ein Energiebedarf bei einer Fahrzeugfahrt prognostiziert werden kann, gehören Geschwindigkeit und Richtung des Windes im Bereich des Fahrzeugs. Da der Luftwiderstand quadratisch mit der Geschwindigkeit des Fahrzeugs relativ zur umgebenden Luft wächst, können bereits kleinere Windgeschwindigkeiten einen spürbaren Einfluss auf den Energieverbrauch haben. Derzeit stehen beispielsweise Wetterkarten von Wetterdiensten zur Verfügung, die allerdings eine recht geringe örtliche Auflösung bieten und die Windverhältnisse deutlich oberhalb der für Fahrzeuge relevanten Höhe von etwa 0 bis 2 m über dem Boden beschreiben. Unterschiedliche Lösungen wurden vorgeschlagen, um bei der Fahrt eines Fahrzeugs die Windverhältnisse zu berücksichtigen: Beispielsweise beschreibt die DE 10 2010 039 569 A1 ein Verfahren zum Ermitteln einer Energieaufwandsinformation für eine Fahrt eines Landfahrzeugs. Eine Kraftwirkung eines Windes bezüglich des Landfahrzeug wird anhand einer Navigationsinformation und einer Windinformation bestimmt.

Die US 2012/0310536 A1 schlägt ein System zur Verarbeitung von Wetterinformationen vor, bei dem ein Fahrzeug Wetterinformationen misst und Änderungen registriert. Das Fahrzeug kann Informationen über Änderungen des Wetters mit anderen Fahrzeugen austauschen.

Bei dem in der DE 101 62 335 A1 beschriebenen Verfahren zur Erzeugung und Aktualisierung einer Wege- und/oder Wegezustandskarte werden durch Verkehrsmittel wetterrelevante Zustandsdaten dynamisch erfasst und an einen Zentralrechner übermittelt, der anhand dieser Daten verkehrsrelevante Wegezustände bestimmt.

In der DE 10 2016 209 678 A1 wird ein Verfahren beschrieben, bei dem Daten zu Seitenwindlasten, die auf ein Fahrzeug einwirken, bei der Ermittlung eines Fahrwegs berücksichtigt werden. Eine lokale Landkarte enthält momentane lokale Windverhältnisse Die DE 10 2016 223 299 A1 beschreibt ein Verfahren, bei dem in Abhängigkeit von einem als auf ein Fahrzeug einwirkend prädizierten Windes eine Fahrstrategie gewählt wird.

Bei dem in der DE 10 2012 220 406 A1 vorgeschlagenen Verfahren wird ein Rotor eines Motorlüfters dazu genutzt, die Windgeschwindigkeit längs zur Fahrtrichtung eines bewegten Fahrzeugs zu ermitteln.

In der EP 2 591 967 A2 wird ein Verfahren zum Betreiben eines Fahrzeugs beschrieben, wobei die Bewegung des Fahrzeugs beim Ausrollen beobachtet wird und Fahrwiderstandswerte ermittelt werden. Es kann eine Komponente des Windgeschwindigkeitsvektors erfasst werden, die parallel zur Bewegungsrichtung verläuft. Liegen Messungen in verschiedene Richtungen vor, etwa bei einer Kurve, so können der Betrag und die Richtung einer Windgeschwindigkeit bestimmt werden.

Es ist eine Aufgabe der vorliegenden Erfindung, ein Verfahren und ein System bereitzustellen, die es ermöglichen, den auf ein Fahrzeug einwirkenden Wind so zu erfassen, dass mit den so gewonnenen Informationen ferner eine Wetterkarte erstellt werden kann.

Erfindungsgemäß wird diese Aufgabe durch ein Verfahren mit den Merkmalen des Anspruchs 1 und ein System mit den Merkmalen des Anspruchs 13 gelöst. Vorteilhafte Ausgestaltungen und Weiterbildungen ergeben sich aus den abhängigen Ansprüchen.

Bei dem erfindungsgemäßen Verfahren werden Längs- und Quersteuerungsdaten des Fahrzeugs, insbesondere eines Kraftfahrzeugs, erfasst und anhand der Längs- und Quersteuerungsdaten werden eine Windgeschwindigkeit und eine Windrichtung des Windes bestimmt.

Dadurch werden vorteilhafterweise im Fahrzeug einfach verfügbare Daten genutzt, um relevante Parameter des auf das Fahrzeug einwirkenden Windes zu erfassen.

Unter "Wind" wird bei der Erfindung insbesondere ein Luftstrom verstanden, der auf das Fahrzeug einwirkt. Es können ein "wahrer Wind", der die Bewegung der Luft relativ zur Erdoberfläche bezeichnet, und ein "scheinbarer Wind", der die Bewegung der Luft relativ zum Fahrzeug bezeichnet, unterschieden werden. Insbesondere kann die Bewegung des "scheinbaren Windes" durch Addition des durch die Bewegung der Fahrzeugs entstehenden Fahrtwindes und des "wahren Windes" beschrieben werden. Bei dem Verfahren geht es insbesondere um die Erfassung des "wahren Windes", der unabhängig von der Bewegung des Fahrzeuges ist und im Folgenden mit dem Begriff "Wind" bezeichnen wird, soweit nichts anderes aus dem Zusammenhang hervorgeht.

Die erfindungsgemäß erfassten Längs- und Quersteuerungsdaten betreffen Informationen über die Steuerung des Fahrzeugs und seiner Bewegung in Vorwärts- und Rückwärtsrichtung sowie in einer dazu senkrechten Richtung, insbesondere nach rechts oder links. Die Aufgabe, die Bewegung eines Fahrzeugs zu steuern, wird typischerweise in diese Komponenten aufgeteilt, beispielsweise um Steuerungsaufgaben an einzelne Fahrerassistenzsysteme zu übertragen oder auf einzelne Einrichtungen des Fahrzeugs zu verteilen.

Die Längssteuerung des Fahrzeugs betrifft dabei insbesondere seine Geschwindigkeit, die beispielsweise durch Steuern und Betätigen eines Motors oder einer Bremseinrichtung beeinflusst wird. Beispielsweise kann ein Motor eine bestimmte Drehzahl und ein bestimmtes Drehmoment aufweisen, durch ein Getriebe kann eine bestimmte Übersetzung erzielt werden und/oder durch eine Bremseinrichtung kann eine bestimmte Bremskraft ausgeübt werden. Auf diese Weise wird der Vortrieb des Fahrzeugs beeinflusst. Zu den Daten der Längssteuerung können auch Daten gehören, die von Sensoren erfasst werden, beispielsweise für die Rotation der Räder, einen Radschlupf zwischen Reifen und Fahrbahnoberfläche, die Drehzahl des Motors oder Zustände eines Getriebes sowie Einstellungen und Zustände eines Fahrwerks.

Die Quersteuerung des Fahrzeugs betrifft Parameter, die eine Geschwindigkeitskomponente des Fahrzeugs in Querrichtung beschreiben oder verändern, insbesondere die Stellung der Räder des Fahrzeugs. Hierdurch werden Kräfte und Antriebsmomente des Fahrzeugantriebs so auf die Fahrbahn übertragen, dass die Fahrzeugbewegung in Querrichtung beeinflusst wird.

Bei der Erfindung werden insbesondere ausschließlich die Längs- und Quersteuerungsdaten verwendet, um die Windgeschwindigkeit und -richtung des auf das Fahrzeug einwirkenden Windes zu bestimmen. In diesem Fall werden lediglich Daten am Fahrzeug selbst erfasst, nicht in seiner Umgebung; es ist also beispielsweise kein gesonderter Sensor für den Wind vorgesehen.

Die erfassten Längs- und Quersteuerungsdaten betreffen insbesondere eine Lenkeinrichtung und eine Vortriebssteuerung des Fahrzeugs.

Bei einer Ausbildung des erfindungsgemäßen Verfahrens umfassen die erfassten Längs- und Quersteuerungsdaten des Fahrzeugs einen Lenkradeinschlagswinkel, ein Lenkmoment und eine Fahrzeuggeschwindigkeit. Die benötigten Daten können vorteilhafterweise besonders einfach bereitgestellt werden und ermöglichen eine besonders einfache und genaue Bestimmung der Windgeschwindigkeit und Windrichtung.

Insbesondere wird hierzu ein physikalisches Modell des Fahrzeug genutzt, beispielsweise ein sogenanntes "Einspurmodell", das die auf ein Fahrzeug wirkenden Kräfte umfassend beschreibt und modelliert. Insbesondere werden hierzu auch Informationen über die äußere Form des Fahrzeugs berücksichtigt, etwa als Konstanten, die für das konkrete Fahrzeug oder einen bestimmten Fahrzeugtyp ermittelt werden. Diese Konstanten können für das gleiche Fahrzeug ferner von bestimmten Betriebszuständen abhängen, etwa von geöffneten Fenstern oder veränderlichen Aufbauten. Anhand der Auswirkungen des Windes auf die Geschwindigkeit des Fahrzeugs sowie auf das zum Halten des Spur notwendige Gegenlenken können Informationen über den Wind gewonnen werden. Bei dem Verfahren werden dazu keine zusätzlichen Sensoren verwendet, die den Wind direkt messen. Das heißt, es wird kein Windsensor verwendet, wie etwa bei der Messung der passiven Bewegung eines Lüftungsrotors oder beim Einsatz spezieller Sensoren zur Messung des Windes.

Das Verfahren kann besonders einfach durchgeführt werden, wenn sich das Fahrzeug auf einer Geradeausfahrt befindet. In diesem Fall können der Lenkwinkel und das Lenkmoment direkt mit den seitlich auf das Fahrzeug wirkenden Kräften des Windes in Beziehung gesetzt werden.

Das Verfahren kann ferner bei einer Kurvenfahrt angewandt werden. In diesem Fall wird berücksichtigt, dass das Fahrzeug durch den Lenkwinkel auf einer nicht gerade verlaufenden Trajektorie geführt werden soll und dieser daher nicht nur dazu dient, seitliche Kräfte auszugleichen. Der Kurvenverlauf wird hierzu berücksichtigt, beispielsweise indem ein bestimmter Ausgangswinkel von dem tatsächlichen Lenkwinkel abgezogen wird, sodass sich der zum Bestimmen des Windes verwendete Lenkwinkel aus der Differenz zwischen dem tatsächlich erfassten Lenkwinkel und einem theoretisch bei Windstille erforderlichen Lenkwinkel ergibt. Der Kurvenverlauf und der Ausgangswinkel, durch den das Fahrzeug auf seiner Bahn geführt wird, können beispielsweise anhand von Kartendaten und einer Lokalisierung des Fahrzeugs, etwa mittels GPS oder eines andere Lokalisierungssystems, bestimmt werden. Alternativ oder zusätzlich können Daten weiterer Systeme dazu beitragen, einen Ausgleich für den Lenkwinkel bei einer Kurvenfahrt zu bestimmen, beispielsweise Daten eines Spurhalteassistenten, wobei mittels an sich bekannter Verfahren, beispielsweise mit optischen Sensoren, Video, Lidar, Radar, Ultraschall oder auf andere Weise ein Fahrbahn- oder Spurverlauf erfasst wird. Beispielsweise kann ein weiteres System, etwa ein Spurhalteassistent, als Ausgangswinkel denjenigen Lenkwinkel bestimmen, der erforderlich ist, um das Fahrzeug unter der Annahme fehlenden äußeren Windes auf seiner Spur zu halten. Dieser Ausgangswinkel kann dann als Eingangsparameter verwendet werden, um eine Komponente des Lenkwinkels zum Gegensteuern gegen einen äußeren Wind zu bestimmen.

Es können ferner weitere Parameter berücksichtigt werden, beispielsweise eine Neigung oder Steigung der befahrenen Fahrbahn, insbesondere quer zur Fahrtrichtung. Eine solche Neigung kann dazu führen, dass die Schwerkraft ein seitliches Gegenlenken erforderlich macht, um in eine bestimmte Richtung, insbesondere geradeaus, zu fahren.

Bei einer Weiterbildung des Verfahrens umfassen die erfassten Längs- und Quersteuerungsdaten des Fahrzeugs eine Antriebsleistung und eine Fahrtrichtung. Ferner wird eine Fahrbahnneigung erfasst und bei der Bestimmung der Windgeschwindigkeit und Windrichtung berücksichtigt.

Dabei wird vorteilhafterweise ausgenutzt, dass ein auf das Fahrzeug einwirkender Wind Auswirkungen auf die benötigte Antriebsleistung hat. Informationen hierüber, insbesondere über den Energie- oder Kraftstoffverbrauch bei einer bestimmten Geschwindigkeit, sind im Fahrzeug typischerweise leicht verfügbar. Zudem variiert der Einfluss des Windes auf die Bewegung und den Antrieb des Fahrzeugs mit dem Anströmwinkel, im Extremfall durch Gegenwind oder Rückenwind. Der Vergleich von Daten für verschiedene Fahrtrichtungen, etwa wenn Messungen für eine Vielzahl von Fahrtrichtungen vorliegen, erleichtert daher eine Bestimmung der Windrichtung.

Die Fahrtrichtung kann auf an sich bekannte Weise erfasst werden, etwa mittels eines Kompass oder eines Satellitennavigationssystems wie GPS. Ferner kann die Fahrtrichtung anhand von Kartendaten und einer Position des Fahrzeugs ermittelt werden, etwa indem das Fahrzeug auf einer bestimmten Route oder Straße lokalisiert und der Verlauf des Fahrwegs analysiert wird.

Auch die Neigung der Fahrbahn, insbesondere entlang der Fahrtrichtung nach oben oder unten, kann anhand von Kartendaten erfasst werden, allerdings können auch andere Verfahren und Sensoren alternativ oder zusätzlich verwendet werden. Die Neigung der Fahrbahn hat ebenso wie der Wind Auswirkungen auf die Leistung, die insbesondere zum Erreichen einer bestimmten Geschwindigkeit erforderlich ist. Es kann dadurch ermittelt werden, welche Energie zum Betrieb des Fahrzeugs aufgewandt wird, und diese Information kann um den Einfluss der Fahrbahnneigung bereinigt werden.

Ein weiterer Parameter, der einen Einfluss auf die benötigte Antriebsleistung hat, ist die Masse des Fahrzeugs, wobei insbesondere die zur Beschleunigung erforderliche Kraft von dieser Größe abhängt. Ferner ist die Rollreibung des Fahrzeugs zu berücksichtigen, die von Parametern wie einem Reibungskoeffizienten der Reifen und des Fahrbahnbelags abhängen kann.

Die ermittelten Daten für ein Fahrzeug hängen auch von dem Fahrzeugtyp beziehungsweise der äußeren Silhouette des Fahrzeugs ab, beispielsweise durch den unterschiedlichen Luftwiderstand verschiedener Karosserieformen. Es kann daher ein Umrechnungsschritt vorgesehen sein, durch den anhand fahrzeugspezifischer Konstanten die gemessenen Parameter so normiert werden, dass die normierten Messwerte unabhängig vom konkreten Fahrzeug zur Bestimmung des Windes verwendet werden können. Konstante Parameter für ein Fahrzeug können für diese Normierung verwendet werden, um die eigentlichen Berechnungsschritte des Verfahrens einfacher durchführen zu können, beispielsweise durch eine vom konkreten Fahrzeug unabhängig ausgebildete Einheit, die nicht über fahrzeugspezifische Parameter verfügt.

Bei einer Weiterbildung wird eine Position zumindest eines weiteren Fahrzeugs in der Umgebung des Fahrzeugs erfasst. Alternativ oder zusätzlich können weitere Objekte, etwa Verkehrsbauwerke, eine Vegetation oder Bebauung in der Umgebung des Fahrzeugs erfasst werden. Die Windgeschwindigkeit und Windrichtung des Windes werden ferner anhand der erfassten Position des weiteren Fahrzeugs oder des weiteren Objekts bestimmt. Dadurch können vorteilhafterweise Effekte wie Windschatten oder Luftwirbel berücksichtigt werden.

Die Erfassung kann auf an sich bekannte Weise erfolgen, etwa mittels Video, Laser, Radar oder Ultraschall, und dabei wird insbesondere die Position relativ zum eigenen Fahrzeug bestimmt. Alternativ oder zusätzlich wird eine relative Geschwindigkeit und Geschwindigkeitsrichtung gegenüber dem eigenen Fahrzeug bestimmt, eine Größe oder eine Querschnittsfläche. Beispielsweise kann erfasst werden, wo und in welchem Abstand zum eigenen Fahrzeug sich ein Fahrzeug befindet und wie groß seine Fläche ist, die einen Wind beispielsweise abschirmen kann, oder welche Form das andere Fahrzeug hat, was zu Verwirbelungen der Luft führen kann.

Beispielsweise können Messungen des eigenen Fahrzeugs verworfen werden, wenn erfasst wird, dass sich andere Fahrzeuge oder Objekte in der Nähe des Fahrzeugs befinden und den Einfluss des Windes auf das Fahrzeug merklich beeinflussen, sodass die Geschwindigkeit und Richtung des Windes nicht sicher bestimmt werden können. Unter diesen Bedingungen bestimmte Werte können verworfen werden. Ferner kann eine Korrektur der erfassten Daten vorgenommen werden, um den Einfluss weiterer Fahrzeuge oder Objekte auszugleichen und zu korrekten Messungen zu gelangen, wobei insbesondere eine aerodynamische Modellierung der Einflüsse auf die Windströmung verwendet wird. Ferner können statistische Verfahren verwendet werden, um beispielsweise plötzlich auftretende Extremwerte oder nicht plausible Werte zu erfassen und von der weiteren Auswertung auszuschließen.

Bei einer weiteren Ausbildung werden externe Wetterdaten empfangen und die Windgeschwindigkeit und Windrichtung des Windes werden ferner anhand der externen Wetterdaten bestimmt. Dabei werden vorteilhafterweise Daten berücksichtigt, die etwa ein Wetterdienst bereitstellt, und zum Beispiel als Korrekturgrößen verwendet. Wenn die externen Wetterdaten den Wind in einer größeren Höhe umfassen, kann insbesondere eine Berechnung durchgeführt werden, anhand derer der Wind in der Höhe des Fahrzeugs, etwa einen Meter über dem Boden, bestimmt wird.

Bei einer Weiterbildung wird eine Position des Fahrzeugs bestimmt. Anhand der erfassten Längs- und Quersteuerungsdaten werden ortsbezogene Winddaten mit einer Windrichtung, einer Windgeschwindigkeit und einer Position erzeugt und ausgegeben. Dadurch wird vorteilhafterweise eine Verknüpfung der erfassten Daten über den Wind mit der Position des Fahrzeugs erreicht.

Die Bestimmung der Position des Fahrzeugs erfolgt auf an sich bekannte Weise, beispielsweise mittels eines globalen Navigationssatellitensystems (GNSS), wie beispielsweise das globale Positionsbestimmungssystem (GPS). Alternativ oder zusätzlich können andere Verfahren zur Positionsbestimmung verwendet werden, beispielsweise mittels Landmarken. Die Position kann in einem globalen Koordinatensystem bestimmt werden oder relativ zu einem bestimmten Bezugspunkt.

Insbesondere wird mit der Position des Fahrzeugs in einem bestimmten Koordinatensystem auch seine Richtung bestimmt. Die Kombination aus Position und Richtung wird als "Pose" des Fahrzeugs bezeichnet.

Die Ausgabe der ortsbezogenen Winddaten kann beispielsweise an ein Fahrerassistenzsystem oder andere Einrichtung des Fahrzeugs erfolgen, etwa eine Antriebssteuerung des Fahrzeugs. Bei einer weiteren Ausbildung werden die ortsbezogenen Winddaten an eine fahrzeugexterne Einheit übertragen und dort gespeichert. Sie können daher vorteilhafterweise extern gespeichert oder weiterverarbeitet und gegebenenfalls auch weiteren Teilnehmern zur Verfügung gestellt werden.

Die fahrzeugexterne Einheit kann beispielweise ein externer Server sein, der mit dem Fahrzeug zumindest zeitweise datentechnisch verbunden ist. Die Verbindung wird auf an sich bekannte Weise hergestellt, beispielsweise anhand eines Mobilfunknetzwerks. Das Fahrzeug kann dabei eine eigene Schnittstelle zu der fahrzeugexternen Einheit umfassen oder mit einer weiteren Einheit verbunden sein, etwa einem mobilen Nutzergerät im Fahrzeug, welches dann die Verbindung zu der fahrzeugexternen Einheit herstellt, etwa über das Internet. Es können ferner Verfahren des Cloud-Computing genutzt werden, um die vom Fahrzeug bereitgestellten Daten zu übertragen und zu verarbeiten.

Bei einer Weiterbildung wird das Verfahren durch eine Vielzahl von Fahrzeugen ausgeführt. Die Fahrzeuge können dabei vorteilhafterweise als "Schwarm" agieren und individuelle Datensätze der einzelnen Fahrzeuge einer gemeinsamen fahrzeugexternen Einheit zur Verfügung stellen. Diese kann die Daten speichern und verarbeiten, insbesondere mittels Verfahren aus dem Bereich der "Big Data", um sie gegebenenfalls wiederum zum Abruf zur Verfügung zu stellen. Die Fahrzeuge können die jeweils von ihnen bestimmten ortsbezogenen Winddaten an die fahrzeugexterne Einheit übertragen. Sie können ferner die von ihnen gemessenen Parameter, insbesondere die erfassten Längs- und Quersteuerungsdaten, übertragen. Insbesondere kann hierbei eine Normierung so erfolgen, dass die Parameter unabhängig von den konkreten Fahrzeugen, insbesondere ihrer äußeren Form sowie Merkmalen des individuellen Antriebseigenschaften der Fahrzeuge, sind und besonders einfach verarbeitet werden können, ohne dabei ihre Herkunft genau kennen zu müssen.

Bei einer weiteren Ausbildung werden durch die fahrzeugexterne Einheit anhand der gespeicherten Winddaten Windkartendaten erzeugt und bereitgestellt. Diese können vorteilhafterweise zum Abruf durch andere Fahrzeuge bereitgestellt und von diesen zur besseren Steuerung ihres Betriebs genutzt werden. Alternativ oder zusätzlich können Windkartendaten durch das Fahrzeug erzeugt und bereitgestellt werden, wobei insbesondere eine direkte Kommunikation mit anderen Fahrzeugen, etwa über eine Car2Car-Kommunikation, erfolgt. Auch von einer Vielzahl von Fahrzeugen erfasste Daten können so genutzt werden. Die Windkartendaten umfassen insbesondere für einen bestimmten Zeitpunkt oder Zeitraum Informationen zu Windgeschwindigkeiten und Windrichtungen an einer Vielzahl von Positionen. Die räumliche Auflösung hängt dabei insbesondere davon ab, in welchen zeitlichen und/oder räumlichen Abständen der Wind durch ein einzelnes oder mehrere Fahrzeuge erfasst wird. Insbesondere wird eine Auflösung von zumindest 50m * 50m oder feiner, bevorzugt zumindest 20m * 20m oder feiner erreicht. Da der Wind bei dem Verfahren anhand der Daten zur Längs- und Quersteuerung des fahrenden Fahrzeugs erfasst wird, können die Windkartendaten die bestimmten Parameter des Windes jeweils bestimmten Positionen eines befahrenen Verkehrsweges zuordnen, insbesondere einer Position längs einer Straße.

Die Windkartendaten können anhand der von einem Fahrzeug oder einer Vielzahl von Fahrzeugen bereitgestellten Daten regelmäßig oder auf Anforderung hin aktualisiert werden. Neue Informationen über den Wind an einer bestimmten Position können dadurch berücksichtigt werden. Es kann beispielsweise vorgesehen sein, dass die Fahrzeuge einer Fahrzeugflotte in regelmäßigen Abständen ortsbezogene Winddaten bestimmen und an die fahrzeugexterne Einheit übertragen. Diese bestimmt ebenfalls in regelmäßigen Abständen aktualisierte Windkartendaten und stellt diese gegebenenfalls zur Übertragung zur Verfügung.

Es kann vorgesehen sein, dass Windkartendaten automatisch an Fahrzeuge übertragen und/oder aktualisiert werden, etwa in bestimmten Zeitabständen, auf Anforderung oder wenn erfasst wird, dass ein Fahrzeug sich in einem bestimmten geografischen Bereich befindet oder befinden wird, etwa weil seine geplante Route durch diesen Bereich verläuft.

Bei einer Weiterbildung umfassen die Windkartendaten Informationen über einen Wind an einer Position, die von dem Fahrzeug, insbesondere von einem bestimmten einer Vielzahl von Fahrzeugen, entfernt ist. Dadurch können vorteilhafterweise lückenhafte Informationen über den Wind in einem geografischen Bereich ergänzt werden.

Da der Wind bei dem Verfahren von dem Fahrzeug jeweils nur lokal erfasst wird, könnten die Windkartendaten nur dann einen Bereich nahezu vollständig abdecken, wenn eine sehr große Zahl von Fahrzeugen Informationen mit einer sehr großen Dichte erfassen würde. Zudem werden bei dem Verfahren die Winddaten typischerweise nur entlang von Straßen und offiziellen Fahrwegen erfasst. Es können jedoch Berechnungen durchgeführt werden, um Informationen über den Wind in weiteren Bereichen zu erhalten, beispielsweise durch Interpolation oder Extrapolation. Zudem können Winddaten für Positionen in einer größeren Höhe über dem Boden bestimmt oder abgeschätzt werden. Auf diese Weise können die Windkartendaten ergänzt werden, um Daten zum Wind in weiteren geografischen Bereichen bereitstellen zu können.

Bei einer Ausbildung erstellt die fahrzeugexterne Einheit anhand der ortsbezogenen Winddaten eine Windprognose. Die Windverhältnisse können dadurch vorteilhafterweise für einen bestimmten Zeitraum vorhergesagt und anderen Teilnehmern bereitgestellt werden.

Die Berechnung der Windprognose erfolgt insbesondere anhand an sich bekannter Verfahren. Es können ortsbezogene Winddaten einer Vielzahl von Fahrzeugen, bei einer Vielzahl von Positionen und/oder zu einer Vielzahl von Zeitpunkten berücksichtigt werden. Die Daten der Windprognose können ferner von den Windkartendaten umfasst sein.

Bei einer weiteren Ausbildung wird anhand der bestimmten Windgeschwindigkeit und Windrichtung des Windes ein Energiebedarf des Fahrzeugs bestimmt. Dieser kann dann vorteilhafterweise genutzt werden, um einen Antrieb des Fahrzeugs möglichst effizient zu steuern, etwa für eine verbrauchsoptimierte vorausschauende Betriebsstrategie des Fahrzeugs. Der bestimmte Energiebedarf kann ferner für eine Navigation des Fahrzeugs genutzt werden, etwa um eine optimierte Route zu planen oder eine Reichweite des Fahrzeugs abzuschätzen. Zudem kann ein Energiebedarf entlang bestimmter Routen abgeschätzt werden, was insbesondere bei einem elektrischen Antrieb von Bedeutung ist, dessen Energiespeicher nicht beliebig schnell aufgefüllt werden kann und daher möglichst effizient genutzt werden soll. Zum Beispiel kann eine Route genutzt werden, bei der Abschnitte mit einem besonders hohen Energiebedarf vermieden werden, oder es kann zwischen verschiedenen Antriebsarten umgeschaltet werden.

Bei einer weiteren Ausbildung können die von der fahrzeugexternen Einheit bestimmten Windkartendaten und/oder die von einem Fahrzeug bestimmte Windgeschwindigkeit und Windrichtung an teilnehmende Einheiten übertragen werden, die beispielsweise einer bestimmten Fahrzeugflotte angehören. Bei der Übertragung kann eine Authentifikation erfolgen, sodass beispielsweise nur Abonnenten eines entsprechenden Dienstes die Daten empfangen können.

Das erfindungsgemäße System zum Erfassen eines auf ein Fahrzeug einwirkenden Windes umfasst eine Erfassungseinheit zum Erfassen von Längs- und Quersteuerungsdaten des Fahrzeugs sowie eine Auswertungseinheit zum Bestimmen einer Windgeschwindigkeit und einer Windrichtung des Windes anhand der Längs- und Quersteuerungsdaten.

Die erfindungsgemäße System ist insbesondere ausgebildet, das vorstehend beschriebene erfindungsgemäße Verfahren zu implementieren. Das System weist somit dieselben Vorteile auf wie das erfindungsgemäße Verfahren.

Bei einer Ausbildung des Systems gemäß der Erfindung umfassen die erfassten Längs- und Quersteuerungsdaten des Fahrzeugs einen Lenkradeinschlagswinkel, ein Lenkmoment und eine Fahrzeuggeschwindigkeit. Die Erfassung kann dabei vorteilhafterweise anhand von Erfassungsmodulen erfolgen, die in Fahrzeugen typischerweise bereits vorhanden sind und deren Daten beispielsweise über einen CAN-Bus des Fahrzeugs erfasst werden können. Das System kann daher besonders einfach und kosteneffizient in bestehende Fahrzeuge integriert werden.

Bei einer weiteren Ausbildung ist die Erfassungseinheit ferner dazu eingerichtet, eine Fahrzeugposition zu erfassen, und die Auswertungseinheit ist dazu eingerichtet, anhand der erfassten Längs- und Quersteuerungsdaten ortsbezogene Winddaten mit einer Windrichtung, einer Windgeschwindigkeit und einer Position zu erzeugen. Dabei ist ferner eine fahrzeugexterne Einheit dazu eingerichtet, über eine datentechnische Verbindung die ortsbezogenen Winddaten von dem Fahrzeug zu empfangen und zu speichern. Dadurch können vorteilhafterweise Daten für mehrere Positionen oder von mehreren Fahrzeugen kombiniert und in einem gemeinsamen Datensatz bereitgestellt werden. Die fahrzeugexterne Einheit kann hierzu beispielsweise anhand der empfangenen und/oder gespeicherten ortsbezogenen Winddaten Windkartendaten erzeugen.

Die Erfindung wird nun anhand von Ausführungsbeispielen mit Bezug zu den Zeichnungen erläutert.

| | |
|---|---|
| Figur 1 | zeigt ein Fahrzeug mit einem Ausführungsbeispiel des erfindungsgemäßen Systems, |
| Figuren 2A und 2B | zeigen Parameter des Fahrzeugs, die bei einem Ausführungsbeispiel des erfindungsgemäßen Verfahrens zur Erfassung von Windgeschwindigkeit und Windrichtung verwendet werden, und |
| Figur 3 | zeigt ein weiteres Ausführungsbeispiel des erfindungsgemäßen Verfahrens. |

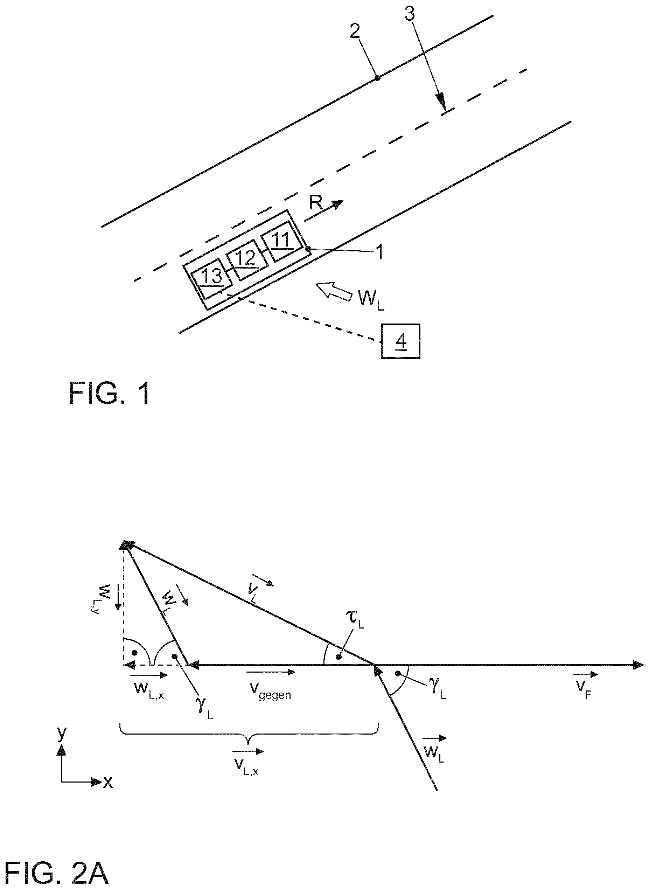

Mit Bezug zu Figur 1 wird ein Fahrzeug mit einem Ausführungsbeispiel der erfindungsgemäßen Systems erläutert.

Das Fahrzeug 1 umfasst eine Auswertungseinheit 12, mit der eine Erfassungseinheit 11 und eine Schnittstelle 13 gekoppelt sind. Es bewegt sich in eine Fahrtrichtung R, die durch einen Pfeil angedeutet ist, während ein äußerer Wind aus einer Windrichtung $W_L$ auf das Fahrzeug 1 einwirkt.

Die Erfassungseinheit 11 umfasst ein Modul zur Positionserfassung zum Erfassen einer Position und Richtung des Fahrzeugs 1. Bei dem Ausführungsbeispiel wird hierzu einen GPS-Modul verwendet, bei weiteren Ausführungsbeispielen können jedoch auch andere Systeme zur Positionsbestimmung in einem globalen oder anderen Koordinatensystem verwendet werden.

Mittels der Schnittstelle 13 ist eine datentechnische Verbindung zu einer fahrzeugexternen Einheit 4 herstellbar, wobei bei dem Ausführungsbeispiel ein Mobilfunknetz zum Herstellen der Verbindung genutzt wird.

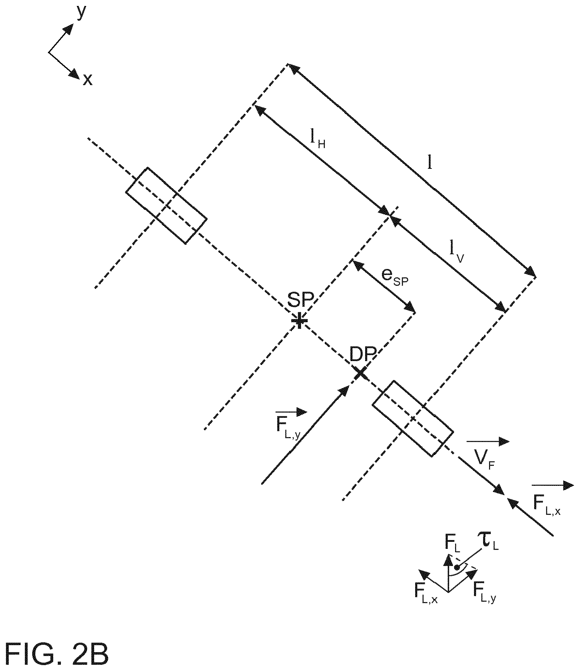

Mit Bezug zu den Figuren 2A und 2B wird ein physikalisches Modell erläutert, anhand dessen Geschwindigkeit und Richtung des auf ein Fahrzeug einwirkenden Windes bestimmt werden können.

Das Fahrzeug 1 fährt mit einer Fahrzeuggeschwindigkeit $\vec{v_F}$ in Richtung der eingezeichneten x-Achse. Dies entspricht der Fahrtrichtung R in Figur 1. Durch die Fahrzeugbewegung tritt ein Luftstrom mit einer der Fahrtrichtung

entgegengesetzten Gegenwindgeschwindigkeit $\overrightarrow{v_{gegen}}$ auf, der als Gegenwind wahrnehmbar ist und dessen Geschwindigkeit betragsgleich mit der Fahrzeuggeschwindigkeit $\overrightarrow{v_F}$ ist. Die Gegenwindgeschwindigkeit $\overrightarrow{v_{gegen}}$ verläuft also parallel zur x-Achse und hat daher nur eine x-Komponente mit dem Betrag der Fahrtgeschwindigkeit:

$$\left|\overrightarrow{v_{gegen}}\right| = \left|\overrightarrow{v_F}\right|.$$

Die Luft weist eine Dichte $\rho_L$ auf.

Gleichzeitig wirkt der schräg zur Fahrtrichtung wehende "wahre" Wind mit einer Windgeschwindigkeit $\overrightarrow{w_L}$ auf das Fahrzeug 1. Der Vektor $\overrightarrow{w_L}$ ist in der Skizze zweimal eingezeichnet, um zu verdeutlichen, dass er ebenso wie der Gegenwind auf das Fahrzeug 1 einwirkt und mit diesem addiert werden kann. Der "wahre" Wind $\overrightarrow{w_L}$ setzt sich aus senkrecht zueinander verlaufende Komponenten zusammen, nämlich einer Komponente $\overrightarrow{w_{L,y}}$ senkrecht zur Fahrtrichtung R, das heißt parallel zur y-Achse, und eine weitere Komponente $\overrightarrow{w_{L,x}}$ parallel zur Fahrtrichtung R, das heißt parallel zur x-Achse.

Aus dem "wahren" Wind $\overrightarrow{w_L}$ und dem durch die Fahrzeugbewegung verursachten Gegenwind $\overrightarrow{v_{gegen}}$ resultiert eine gesamte auf das Fahrzeug 1 wirkende effektive Windgeschwindigkeit $\overrightarrow{v_L}$, die dem "scheinbaren" Wind entspricht, der effektiv auf das Fahrzeug 1 einwirkt. Figur 2A zeigt, wie aus der Summe dieser Komponenten eine effektive Windgeschwindigkeit $\overrightarrow{v_L}$ resultiert, die dem "scheinbaren" Wind entspricht, der auf das Fahrzeug 1 einwirkt:

$$\overrightarrow{v_L} = \overrightarrow{v_{gegen}} + \overrightarrow{w_L}$$

Der "wahre" Wind trifft mit einem Winkel $\gamma_L$ auf das Fahrzeug 1. Der effektive Luftstrom mit der effektiven Windgeschwindigkeit $\overrightarrow{v_L}$ schließt mit der eingezeichneten x-Achse einen Anströmwinkel $\tau_L$ ein und trifft in diesem Anströmwinkel $\tau_L$ auf das Fahrzeug 1.

Die effektive Windgeschwindigkeit $\overrightarrow{v_L}$ kann in senkrecht zueinander verlaufende Komponenten zerlegt werden, wobei eine Komponente $\overrightarrow{v_{L,y}}$ senkrecht zur Fahrtrichtung R, das heißt parallel zur eingezeichneten y-Achse, und eine weitere Komponente $\overrightarrow{v_{L,x}}$ parallel zur Fahrtrichtung R, das heißt parallel zur x-Achse, verläuft.

Beim Auftreffen auf das Fahrzeug 1 entsteht durch die effektive Windgeschwindigkeit $\overrightarrow{v_L}$ eine gesamte Luftkraft $\overrightarrow{F_L}$, die mit der x-Achse einen Anströmwinkel $\tau_L$ einschließt. Sie setzt sich folgendermaßen aus einer Komponente $\overrightarrow{F_{L,x}}$ parallel zur x-Achse, das heißt entsprechend der Komponente $\overrightarrow{v_{L,x}}$ der Luftgeschwindigkeit, und einer dazu senkrechten Komponente $\overrightarrow{F_{L,y}}$, entsprechend der Komponente $\overrightarrow{v_{L,y}}$ der Luftgeschwindigkeit, zusammen:

$$\overrightarrow{F_L} = \overrightarrow{F_{L,x}} + \overrightarrow{F_{L,y}}$$

Figur 2B zeigt das Modell, anhand dessen die Momente bestimmt werden, die auf das Fahrzeug 1 einwirken. Das Fahrzeug 1 weist eine Fahrzeuglänge *l* von einer Hinterachse zu einer Vorderachse und einen Fahrzeugschwerpunkt SP auf. Die Längsachse des Fahrzeugs verläuft parallel zur x-Achse, die bei dem Ausführungsbeispiel mit der Fahrtrichtung übereinstimmt. In der Fahrbahnebene senkrecht dazu ist die y-Achse definiert. Ferner wird eine z-Achse als Achse senkrecht zur Erdoberfläche definiert, die bei dem Beispiel durch den Fahrzeugschwerpunkt SP verläuft.

Ferner ist ein Druckpunkt *DP* definiert als der Punkt, an dem der seitlich auf das Fahrzeug 1 auftreffende Wind effektiv vektoriell auf die Fahrzeugoberfläche wirkt. In einem Einspurmodell kann die Wirkung des Windes auf das Fahrzeug 1 als Wirkung eines Kraftvektors dargestellt werden, der am Druckpunkt *DP* angreift. Die Lage des Druckpunktes *DP* ist insbesondere experimentell bestimmbar und hängt beispielsweise von der Silhouette das Fahrzeugs 1, aerodynamischen Oberflächeneigenschaften und Aufbauten ab, sowie von Zuständen von Einrichtungen, welche die Form des Fahrzeugs 1 beeinflussen, beispielsweise dem Öffnungszustand von Fenstern. Bei dem Ausführungsbeispiel ist vorgesehen, dass die Lage des Druckpunkts *DP* fest vorgegeben ist. Das Verfahren kann jedoch in Abhängigkeit von verschiedenen Zuständen des Fahrzeugs 1 an einen geänderten Druckpunkt *DP* angepasst werden.

Ferner sind vom Schwerpunkt SP aus ein Abstand zur Hinterachse $l_H$ und ein Abstand zur Vorderachse $l_V$ definiert, die daher zusammen die gesamte Länge *l* des Fahrzeugs 1 ergeben.

Die senkrecht zur Fahrtrichtung R auf das Fahrzeug wirkende seitliche Komponente der Luftkraft $\overrightarrow{F_{L,y}}$ entspricht dem Luftwiderstand des Fahrzeugs 1 gegenüber der seitlichen Komponente $\overrightarrow{v_{L,y}}$ des Windes senkrecht zur x-Achse, das heißt zur Fahrzeuglängsachse. Ferner wird der Abstand zwischen dem Druckpunkt DP und dem Schwerpunkt SP als $e_{SP}$ bezeichnet. Es tritt ein Windgiermoment $M_{Lz} = F_{Ly} * e_{SP}$ auf, das einem "Hebel" entspricht, mit dem der Wind das Fahrzeug 1 in seitliche Richtung aus seiner Bahn ablenkt, sodass mit einem Lenkradeinschlagswinkel $\delta_L$ gegengelenkt werden muss, wobei eine Lenkübersetzung $i_L$ verwendet wird.

Der Wind wirkt sich also sowohl auf die Fahrzeuglängsdynamik als auch auf die Fahrzeugquerdynamik aus und wird bei der Erfindung anhand der erfassten Längs- und Quersteuerungsdaten des Fahrzeugs bestimmt.

Die Beziehungen in der Fahrzeugquerdynamik, das heißt für die Wirkung der senkrecht zur Fahrtrichtung wirkenden Komponente $\overrightarrow{v_{L,y}}$ des Windes, können mit der folgenden Formel angegeben werden:

$$\frac{\delta'_L}{v_F * w_{L,y}} = -k_y * \frac{C_{\alpha H} * (l_H + e_{SP}) - C_{\alpha V} * (l_V - e_{SP})}{C_{\alpha H} * C_{\alpha V} * l}$$

Dabei gelten die Definitionen:

$$k_y = \frac{1}{2} * c_y * A_{quer,y} * \rho_L$$

$$e_{SP} = \frac{c_{Mz}}{c_y} * l$$

$$\delta'_L = \frac{\delta_L}{i_L}$$

Dabei bezeichnen $A_{quer,y}$ eine Querspanfläche des Fahrzeugs 1, betrachtet aus Richtung der y-Achse, $C_{\alpha H}$ die Schräglaufsteifigkeit der Hinterachse, $C_{\alpha V}$ die Schräglaufsteifigkeit der Vorderachse, $c_{Mz}$ einen aerodynamischen Windgiermomentbeiwert und $c_y$ einen aerodynamischen Windkraftbeiwert. Dabei handelt es sich um Konstanten, die für das Fahrzeug 1 insbesondere experimentell bestimmt und zur Ausführung des Verfahrens bereitgestellt werden.

Nach dem Auflösen der Formel nach der seitlich auf das Fahrzeug 1 einwirkenden Windgeschwindigkeit $w_{L,y}$ parallel zur y-Achse ergibt sich:

$$w_{L,y}(\delta_L, v_F) = -\frac{\delta_L * C_{\alpha H} * C_{\alpha V} * l}{C_{\alpha H} * (l_H + e_{SP}) - C_{\alpha V} * (l_V - e_{SP})} * \frac{1}{k_y * v_F * i_L}$$

Um den Anströmwinkel $\tau_L$ zu bestimmen, werden die Beziehungen in der Fahrzeugquerdynamik gegenüber der seitlich einwirkenden Luftkraft $F_{L,y}$ mit der folgenden Formel modelliert:

$$F_{L,y} = \frac{1}{2} * c_y(\tau_L) * A_{quer,y} * \rho_L * v_{L,y}^2$$

Da die Gegenwindgeschwindigkeit $\overrightarrow{v_{gegen}}$ nur parallel zur Fahrtrichtung wirkt, entspricht die dazu senkrechte Komponente $\overrightarrow{v_{L,y}}$ der effektiven Windgeschwindigkeit der senkrechten Komponente $\overrightarrow{w_{L,y}}$ des "wahren" Windes: $\overrightarrow{v_{L,y}} = \overrightarrow{w_{L,y}}$.

Es gilt also:

$$F_{L,y} = \frac{1}{2} * c_y(\tau_L) * A_{quer,y} * \rho_L * w_{L,y}^2$$

Es zeigt sich, dass der aerodynamische Windseitenkraftbeiwert $c_y$ nicht-linear vom Anströmwinkel $\tau_L$ abhängt. Allerdings kann für kleine Werte von $\tau_L$ die folgende lineare Näherung für den aerodynamischen Windseitenkraftbeiwert $c_y$ verwendet werden:

$$c_y(\tau_L) = c_y * \tau_L$$

Diese Näherung wird bei Anströmwinkeln $\tau_L$ von weniger als 35°, bevorzugt weniger als 25°, weiter bevorzugt weniger als 15° verwendet. Messungen mit größerem Anströmwinkel $\tau_L$, wie sie insbesondere bei geringer Fahrzeuggeschwindigkeit $v_F$ und/oder starker Windstärke $w_L$ auftreten, können durch einen Filterschritt erkannt und von der Analyse ausgeschlossen werden. Ferner können in diesen Fällen andere Verfahren verwendet werden, wobei beispielsweise $c_y(\tau_L)$ auf andere Weise als die Linearisierung bestimmt wird.

Durch Einsetzen dieser Vereinfachung und Multiplizieren mit $e_{SP}$ ergibt sich:

$$F_{L,y} * e_{SP} = \frac{1}{2} * c_y * \tau_L * A_{quer,y} * \rho_L * w_{L,y}{}^2 * e_{SP}$$

$$M_{L,z} = \frac{1}{2} * c_y * \tau_L * A_{quer,y} * \rho_L * w_{L,y}{}^2 * e_{SP}$$

Das Windgiermoment $M_{L,z}$ um die z-Achse entspricht dabei dem Lenkradeinschlagsmoment $M_H$ unter Berücksichtigung der Lenkübersetzung $i_s$ und Lenkungsverstärkung $A_s$ und wird daher nachfolgend auch als Lenkmoment $M_{L,z}$ bezeichnet:

$$M_H = \frac{M_{L,z}}{i_s * A_s}$$

Daraus folgt:

$$M_{L,z} = M_H * i_s * A_s$$

Dabei gilt wegen der oben erläuterten Linearisierung von $c_y(\tau_L)$:

$$c_y * \tau_L * e_{SP} = c_{M,z} * \tau_L * l$$

Dabei bezeichnen $F_{L,y}$ die Windseitenkraft senkrecht zur Längsachse x des Fahrzeugs 1, $M_{L,z}$ das Windgiermoment relativ zur z-Achse beziehungsweise das Lenkmoment, $c_y$ den aerodynamischen Windseitenkraftbeiwert und $c_{M,z}$ den aerodynamischen Windgiermomentbeiwert.

Zusammengefasst ergibt sich:

$$M_{L,z} = \frac{1}{2} * c_{M,z} * \tau_L * A_{quer,y} * \rho_L * w_{L,y}{}^2 * l$$

Daraus folgt für den Anströmwinkel $\tau_L$ der folgende Zusammenhang mit der oben angegebenen seitlichen Windgeschwindigkeit $w_{L,y}{}^2$:

$$\tau_L(M_{L,z}, w_{L,y}{}^2) = 2 * \frac{M_{L,z}}{c_{Mz} * A_{quer,y} * \rho_L * l} * \frac{1}{w_{L,y}{}^2}$$

Anhand des aus Figur 2A ablesbaren geometrischen Zusammenhangs zwischen dem Anströmwinkel $\tau_L$, dem Gegenwind $\overrightarrow{v_{gegen}}$ - mit dem Betrag der Fahrtgeschwindigkeit $v_F$ - und der seitlichen Komponente der "wahren" Windgeschwindigkeit $\overrightarrow{w_{L,y}}$ kann auch der Betrag der zur Fahrtrichtung parallelen Komponente $w_{L,x}$ des "wahren" Windes bestimmt werden:

$$\tan \tau_L = \frac{w_{L,y}}{v_F + w_{l,x}}$$

Daher gilt:

$$w_{L,x} = \frac{1}{\tan(\tau_L)} * w_{L,y} - v_F$$

Die zur Fahrtrichtung parallele Komponente $w_{l,x}$ des "wahren" Windes kann alternativ anhand der Fahrzeuggeschwindigkeit und der Antriebsleistung beziehungsweise der zum Antrieb benötigten Kraft bestimmen, wie weiter unten mit Bezug zu einem weiteren Ausführungsbeispiel beschrieben ist.

Der Betrag des "wahren" Windes $|\vec{w_L}|$ berechnet sich als:

$$w_L{}^2 = w_{L,x}{}^2 + w_{L,y}{}^2$$

$$|\vec{w_L}| = \sqrt{w_{L,x}{}^2 + w_{L,y}{}^2}$$

Für den Winkel $\gamma_L$, mit dem der "wahre" Wind $w_L$ auf das Fahrzeug 1 trifft, gilt ebenfalls aufgrund geometrischer Überlegungen gemäß Figur 2A:

$$\gamma_L = \arctan\left(\frac{w_{L,y}}{w_{L,x}}\right)$$

Die als Winkel $\gamma_L$ relativ zum Fahrzeug 1 bestimmte Windrichtung $W_L$ kann nun in ein äußeres, insbesondere globales, Koordinatensystem transformiert werden. Hierzu wird die Pose des Fahrzeugs 1 verwendet, die mittels der Erfassungseinheit 11 als Kombination von Position und Richtung des Fahrzeugs 1 in einem globalen Koordinatensystem erfasst wird. Anschließend können die "wahre" Windgeschwindigkeit $w_L$ und die Windrichtung $W_L$ ausgegeben werden.

Bei dem Ausführungsbeispiel werden also zur Berechnung der "wahren" Windgeschwindigkeit $w_L$ und des Winkels $\gamma_L$ der Windrichtung $W_L$ relativ zum Fahrzeug 1 die folgenden Fahrzeugparameter verwendet, die für ein Fahrzeug oder einen Fahrzeugtyp typischerweise konstant sind: Die Schräglaufsteifigkeit der Hinterachse $C_{\alpha H}$, die Schräglaufsteifigkeit der Vorderachse $C_{\alpha V}$, der aerodynamische Windseitenkraftbeiwert $c_y$, der aerodynamische Windgiermomentbeiwert $c_{M,z}$, die Querspanfläche des Fahrzeugs in Richtung der y-Achse $A_{quer,y}$, die Fahrzeuglänge $l$ sowie die Lenkübersetzung $i_L$. Ferner wird die Dichte $\rho_L$ der Luft berücksichtigt, die innerhalb typischer Temperaturbereiche ebenfalls als konstant angenommen werden kann.

Über einen CAN-Bus werden als Variablen die Fahrzeuggeschwindigkeit $v_F$, der Lenkradeinschlagswinkel $\delta_L$ und das Lenkradeinschlagsmoment $M_{L,z}$ erfasst. Diese Parameter werden während der Fahrt gemessen und können sich verändern. Es handelt sich also um die Variablen, in Abhängigkeit von denen die "wahre" Windgeschwindigkeit $w_L$ und der Winkel $\gamma_L$ der Windrichtung $W_L$ relativ zum Fahrzeug 1 bestimmt werden.

Die oben erläuterte Linearisierung des Seitenwindbeiwerts $c_y(\tau_L)$ kann nur für Werte von kleinen Anströmwinkeln $\tau_L < 35°$ verwendet werden. Bei größeren Anströmwinkeln, die beispielsweise bei geringer Fahrtgeschwindigkeit $v_F$ und/oder großen Windgeschwindigkeiten $w_L$ auftreten können, kann dieser Parameter auf andere Weise bestimmt werden, beispielsweise durch Abrufen des Wertes aus einer entsprechenden Tabelle oder mittels nichtlinearer Berechnungen. Ferner können Messungen bei einem Anströmwinkel $\tau_L > 35°$ verworfen und herausgefiltert werden.

In weiteren Ausführungsbeispielen können alternative Modelle verwendet werden, um anhand der Quer- und Längssteuerungsdaten des Fahrzeugs die Windgeschwindigkeit $w_L$ und Windrichtung $W_L$ zu bestimmen. Beispielsweise können fahrzeugspezifische Parameter des Fahrzeugs 1 durch Vereinfachungen ersetzt werden, etwa um das Verfahren ohne oder mit nur geringen Änderungen für eine größere Anzahl verschiedener Fahrzeugmodelle anwenden zu können.

Nachfolgend wird ein Ausführungsbeispiel des erfindungsgemäßen Verfahrens erläutert. Dabei wird von dem oben mit Bezug zu Figur 1 erläuterten Ausführungsbeispiel des erfindungsgemäßen Systems sowie von dem mit Bezug zu den Figuren 2A und 2B erläuterten physikalischen Modell ausgegangen.

Bei dem Ausführungsbeispiel werden mittels der Erfassungseinheit 11 eine aktuelle Fahrzeuggeschwindigkeit

$v_F$ - damit auch der Betrag $v_{gegen}$ der Geschwindigkeit des Gegenwindes -, ein aktueller Lenkradeinschlagswinkel $\delta_L$ sowie ein Lenkmoment $M_{L,z}$ erfasst. Die Erfassung erfolgt über einen CAN-Bus des Fahrzeugs 1, über den die notwendigen Daten von Sensoren und Einrichtungen des Fahrzeugs 1 übertragen werden.

Ferner wird erfasst, dass sich das Fahrzeug 1 auf einer Geradeausfahrt befindet. Bei dem Ausführungsbeispiel werden hierzu von einer Videokamera erfasste Bilddaten des vor dem Fahrzeug 1 liegenden Bereichs verwendet. In weiteren Ausführungsbeispielen kann die Information über die Geradeausfahrt auch anhand einer aktuellen Position des Fahrzeugs 1 und einer Karte erhalten werden. In weiteren Ausführungsbeispielen kann das Verfahren ferner bei einer Kurvenfahrt angewandt werden, wobei hier zunächst ein Ausgangswinkel bestimmt wird, der dem Lenkwinkel entspricht, durch den das Fahrzeug 1 auf der Fahrbahn verbleibt, und diese Ausgangslage wird von dem tatsächlichen Lenkradeinschlagswinkel $\delta_L$ abgezogen, um zu dem für das Verfahren benötigten Lenkradeinschlagswinkel zu gelangen. Dabei kann gegebenenfalls auch die Fahrzeuggeschwindigkeit berücksichtigt werden, insbesondere um bei der Kurvenfahrt auftretende Kräfte auf das Fahrzeug und resultierende kinetische Effekte wie Über- oder Untersteuern des Fahrzeugs auszugleichen. Insbesondere wird der Ausgangswinkel unter Berücksichtigung dieser weiteren kinetischen Effekte bei der Kurvenfahrt bestimmt.

Anhand der oben erläuterten Formeln des Einspurmodells werden durch die Auswertungseinheit 12 die "wahre" Windgeschwindigkeit $w_L$ und die Windrichtung $W_L$ beziehungsweise der Winkel $\gamma_L$ relativ zum Fahrzeug 1 bestimmt.

Bei einem weiteren Ausführungsbeispiel werden ferner externe Wetterdaten für die Position des Fahrzeugs 1 empfangen, beispielsweise von einem Wetterdienst. Diese Werte können zur Korrektur der im Fahrzeug 1 bestimmten Werte genutzt werden. Da solche Wetterdaten typischerweise für größere Höhen über dem Boden ermittelt werden, kann eine Umrechnung auf die Höhe des Fahrzeugs, etwa 0 bis 2 m über dem Boden, vorgenommen werden.

Bei einem weiteren Ausführungsbeispiel wird ferner erfasst, dass sich in der Umgebung des Fahrzeugs 1 ein weiteres Fahrzeug oder Objekt befindet, das einen Einfluss auf den Wind hat, dem das Fahrzeug 1 ausgesetzt ist. Es kann sich dabei beispielsweise um ein Fahrzeug, ein Bauwerk oder ein Element der Vegetation am Rand der Straße 2 handeln, in dessen Windschatten sich das Fahrzeug 1 befindet oder das zu Verwirbelungen und Störungen des Windes führt. Das weitere Fahrzeug oder Objekt wird auf an sich bekannte Weise erfasst, insbesondere mittels Video, Lidar, Radar oder Ultraschall. Ferner kann die Erfassung mittels eines Fahrerassistenzsystems erfolgen, etwa eines Überholassistenten oder eines Systems zur Unterstützung von Fahrmanövern, etwa eines Überholvorgangs oder einer Folgefahrt, wobei die Beziehung des Fahrzeugs 1 zu einem anderen Fahrzeug ständig beobachtet und ausgewertet wird. Die Erfassung erfolgt insbesondere mittels Sensoren für ein solches Fahrerassistenzsystem. Es wird bestimmt, inwieweit der vom Fahrzeug 1 wahrgenommene Wind hierdurch verändert wird, beispielsweise durch eine Modellierung anhand der Größe des weiteren Fahrzeugs oder Objekts. In der Folge können die bestimmte Windgeschwindigkeit $w_L$ und Anströmrichtung $\tau_L$ sowie die Windrichtung $W_L$ korrigiert werden, sodass die Messung des Fahrzeugs 1 mit der Realität des Windes möglichst gut mit dem realen Wind übereinstimmt. Ferner können Messungen unter bestimmten Störungsbedingungen verworfen werden, etwa wenn sich das Fahrzeug 1 im Windschatten eines anderen Fahrzeugs befindet. Ferner kann eine statistische Filterung der Messungen erfolgen, etwa indem plötzlich auftretende Extremwerte verworfen werden, oder es kann ein Muster von Änderungen der Messwerte erkannt und zum Verwerfen verfälschter Werte genutzt werden.

Durch die Erfassungseinheit 11, die eine nicht näher dargestellte Positionserfassungseinheit umfasst, wird ferner die aktuelle Position des Fahrzeugs 1 bestimmt. Anhand dieser Position sowie der durch die Auswertungseinheit 12 bestimmten "wahren" Windgeschwindigkeit $w_L$ und der Winkel $\gamma_L$ der Windrichtung $W_L$ relativ zum Fahrzeug 1 erzeugt die Auswertungseinheit 12 ortsbezogene Winddaten und überträgt diese über die Schnittstelle 13 an die fahrzeugexterne Einheit 4. Bei dem Ausführungsbeispiel handelt es sich bei der fahrzeugexternen Einheit 4 um einen Server 4, der anhand der übertragenen ortsbezogenen Winddaten Windkartendaten erzeugt. Die Windkartendaten können zudem anhand der aktuellen ortsbezogenen Winddaten aktualisiert werden, sofern bereits alte Daten vorliegen.

Bei dem Ausführungsbeispiel werden die Windkartendaten durch den externen Server 4 zum Abruf bereitgestellt. Das Fahrzeug 1 oder ein anderes hierzu berechtigtes Fahrzeug kann Windkartendaten für einen bestimmten geografischen Bereich anfordern und empfangen. Dies kann automatisch durch eine Einrichtung des Fahrzeugs 1 durchgeführt werden, beispielsweise durch ein Navigationssystem, das erfasst, dass sich das Fahrzeug in einem bestimmten Bereich befindet oder dass eine geplante Route durch den Bereich verläuft. Anhand der so empfangenen Informationen über Geschwindigkeit und Richtung des Windes wird der Energiebedarf des Fahrzeugs 1 bestimmt, um eine Fahrt mit einer bestimmten Geschwindigkeit und entlang einer bestimmten Route durchzuführen. Es werden eine auf optimalen Verbrauch ausgerichtete Betriebsstrategie für das Fahrzeug 1 sowie eine optimierte Route bestimmt und das Fahrzeug wird entsprechend gesteuert.

Das Verfahren wird bei einem weiteren Ausführungsbeispiel anhand von Daten einer Vielzahl von Fahrzeugen 1 durchgeführt, die sich an verschiedenen Positionen befinden und gegebenenfalls zu unterschiedlichen Zeitpunkten ortsbezogene Winddaten für einen gemeinsamen Server 4 bereitstellen. Die so gewonnenen Daten werden insbesondere mittels Methoden des "Big Data" ausgewertet, wobei auch Verfahren des maschinellen Lernens angewandt werden können. Es werden Windkartendaten erzeugt oder aktualisiert und zum Abruf bereitgestellt.

Um Windkartendaten mit möglichst umfangreichen Informationen zu den Windverhältnissen in einem geografischen Bereich bieten zu können, werden Berechnungen durchgeführt, durch die der Wind an weiteren Positionen bestimmt wird, die von dem Fahrzeug 1 entfernt sind, beispielsweise abseits der Straße 2 oder auf Abschnitten der Straße 2, die derzeit nicht im Fahrzeug 1 befahren werden. Hierzu werden an sich bekannte Verfahren zur Bestimmung des Windes anhand entfernter Messpunkte verwendet, insbesondere mittels Extrapolation oder einer Modellierung der aerodynamischen Eigenschaften der Umgebung.

Bei weiteren Ausführungsbeispielen wird ferner eine Windprognose für Windverhältnisse zu einem späteren Zeitpunkt erzeugt. Auch hierzu werden an sich bekannte Verfahren verwendet, insbesondere Methoden des Maschinenlernens.

Bei weiteren Ausführungsbeispielen werden an die externe Einheit 4 neben Daten über den Wind auch Informationen über weitere Witterungsverhältnisse übertragen. Beispielsweise kann das Fahrzeug 1 auch eine Feuchtigkeit oder Daten über die Haftungseigenschaften des Straßenbelags erfassen, die beispielsweise durch die Witterungsbedingungen, Nässe, Eis oder Schmutz beeinträchtigt werden können, werden an die externe Einheit 4 übertragen. Solche Informationen können zudem von den ortsbezogenen Winddaten sowie von den anschließend erzeugten Windkartendaten umfasst sein.

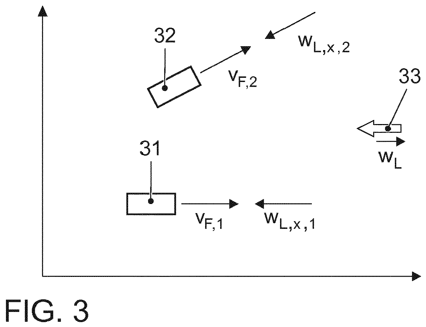

Mit Bezug zu Figur 3 wird ein weiteres Ausführungsbeispiel der Erfindung erläutert. Dabei wird, wo möglich, von der oben bereits verwendeten Notation ausgegangen.

Bei dem in Figur 3 dargestellten Fall bewegen sich ein erstes 31 und ein zweites Fahrzeug 32 auf einer Ebene, während aus einer Windrichtung $W_L$ ein durch einen Pfeil 33 angedeuteter gleichmäßiger Wind weht.

Bei dem Ausführungsbeispiel wird betrachtet, wie sich die der jeweiligen Fahrtrichtung entgegen gerichtete Luftkraft $F_{L,x}$ auf die Fahrzeuge 31, 32 auswirkt. Die Beziehungen in der Fahrzeuglängsdynamik gegenüber der parallel zur Fahrtrichtung einwirkenden Luftkraft $F_{Lx}$ werden dazu mit der folgenden Formel modelliert:

$$F_{L,x} = \frac{1}{2} * c_x * A_{quer,x} * \rho_L * v_{L,x}{}^2$$

Dabei bezeichnen $A_{quer,x}$ die Querspanfläche des jeweils betrachteten Fahrzeugs 31, 32 in Richtung der x-Achse und $c_x$ den aerodynamische Windkraftbeiwert in Fahrzeuglängsrichtung. Für die Zwecke des Ausführungsbeispiels wird von einheitlich ausgebildeten Fahrzeuge 31, 32 ausgegangen, bei denen sämtliche relevanten Konstanten gleich sind.

Ferner ist $v_{L,x}$ der Betrag der zur x-Achse parallelen Komponente des gesamten Windes $\vec{v_L}$:

$$v_{L,x} = w_{L,x} + v_F$$

Die gesamte der Fahrzeugbewegung in Längsrichtung entgegenwirkende Kraft $F_x$ setzt sich zusammen wie folgt:

$$F_x = F_R + F_{St} + F_B + F_{Lx}$$

Dabei bezeichnen $F_R$ den Rollwiderstand des Fahrzeugs 31, 32 mit der Masse $m$ bei einer Erdbeschleunigung $g$ und dem Rollkoeffizienten $f_R$ ($F_R = m * g * f_R$), $F_{St}$ den Steigungswiderstand bei einer Steigung $\alpha$ ($F_{St} = m * g * \sin \alpha$), $F_B$ den Beschleunigungswiderstand bei einer Beschleunigung $\alpha$ in Fahrtrichtung ($F_B = m * a$) und $F_{L,x}$ den gesamten Luftwiderstand parallel zur x-Achse, das heißt parallel zur Fahrtrichtung.

Die Gesamtwindgeschwindigkeit $v_{L,x}$ des Fahrzeugs 31, 32 parallel zur x-Achse resultiert aus der Fahrtgeschwindigkeit $v_F$ und der parallelen Komponente $w_{L,x}$ des "wahren Windes". Daraus und aus der oben angegebenen Formel folgt nach Auflösen nach $w_{L,x}$:

$$w_{L,x} = \sqrt{\frac{2 * (F_x - F_B - F_{St} - F_R)}{c_x * A_{quer,x} * \rho_L}} - v_F$$

Die Komponente der "wahren" Windgeschwindigkeit $w_{L,x}$ entlang der Bewegungsrichtung eines Fahrzeugs 31, 32 kann also anhand der Kräfte bestimmt werden, die zum Erreichen einer bestimmten Fahrzeuggeschwindigkeit $v_F$

notwendig sind. Es werden daher Daten über die Längssteuerung des Fahrzeugs 31, 32 erfasst, um den Wind zu erfassen.

Bei dem Ausführungsbeispiel wird also die Windgeschwindigkeit $w_{L,x}$ parallel zur Bewegungsrichtung des Fahrzeugs 31, 32 bestimmt. Da sich die Fahrtrichtungen unterscheiden, werden verschiedene Komponenten der gesamten Windgeschwindigkeit $w_L$ bestimmt, jeweils in Fahrtrichtung des Fahrzeuge 31, 32, das heißt $w_{L,x,1}$ und $w_{L,x,2}$. Die benötigten Ausgangsdaten werden anhand des jeweiligen Energieverbrauchs der Fahrzeuge 31, 32 bestimmt, der erforderlich ist, um die Kräfte zum Erreichen der jeweiligen Fahrzeuggeschwindigkeiten $v_{F,1}$, $v_{F,2}$ bereitzustellen.

Die Windrichtung $W_L$ kann bestimmt werden, indem dieses Verfahren für eine Vielzahl von Fahrzeugen 31, 32 ausgeführt wird, die sich in verschiedene Richtungen bewegen. Fährt das Fahrzeug 31, wie dargestellt, genau gegen die Windrichtung $W_L$, so entspricht die der Fahrzeuggeschwindigkeit $v_{F,1}$ entgegenwirkenden Komponente $w_{L,x,1}$ des Windes genau der Windgeschwindigkeit: $|\overrightarrow{w_{L,x,1}}| = |\overrightarrow{w_L}|$. Fährt ein Fahrzeug 32 jedoch schräg zur Windrichtung $W_L$, so ist die der Fahrzeuggeschwindigkeit $v_{F,2}$ entgegenwirkende Komponente $w_{L,x,2}$ des Windes kleiner als die Windgeschwindigkeit: $|\overrightarrow{w_{L,x,2}}| < |\overrightarrow{w_L}|$. Insgesamt kann die der Fahrzeuggeschwindigkeit $v_{F,2}$ entgegenwirkende Komponente $w_{L,x,1}$, $w_{L,x,2}$ des Windes in Abhängigkeit von dem Winkel $\gamma_L$ zwischen dem Wind $W_L$ und der Fahrtrichtung des Fahrzeugs 31, 32 berechnet werden als

$$w_{L,x,1}(\gamma_{L,1}) = w_L * \cos(\gamma_{L,1})$$

Der Energieverbrauch der Fahrzeuge 31, 32 ist daher umso höher, je direkter sie sich entgegen der Windrichtung $W_L$ bewegen und je stärker sie daher den Gegenwind erfahren. Durch einen Vergleich des Energieverbrauchs von Fahrzeugen 31, 32, die insbesondere in viele unterschiedliche Richtungen fahren, kann daher ermittelt werden, aus welcher Richtung der Wind einfällt, da es bei direktem Gegenwind zur größten Steigerung des Energieverbrauchs kommt. Da die Fahrtrichtungen der Fahrzeuge 31, 32 erfasst werden, kann anhand des oben genannten Zusammenhangs mit einer Cosinus-Funktion ein Näherungsverfahren durchgeführt werden. Bei diesem wird anhand der zuvor bestimmten Windgeschwindigkeiten $w_{L,x,1}$, $w_{L,x,2}$ entgegen der jeweiligen Fahrtrichtungen ermittelt, welches die Richtung des Windes $W_L$ ist und wie groß die gesamte Windgeschwindigkeit $w_L$ ist. Hierzu können an sich bekannte Fitting-Verfahren verwendet werden.

Da große Anströmwinkel, wie oben erläutert, zu nicht-linearen Prozessen führen, die eine Analyse der Daten verkomplizieren, können bei großen Anströmwinkeln gemessene Daten verworfen oder korrigiert werden; hierzu kann beispielsweise ein Grenzwert vorgesehen sein, etwa 35°, bevorzugt 25°, weiter bevorzugt 15°, bei dessen Überschreitung ein Messwert verworfen wird.

Weitere Parameter, um die Werte von $F_R$, $F_{St}$ und $F_B$ zu bestimmen, werden bei dem Verfahren ebenfalls erfasst. Sie werden beispielsweise experimentell bestimmt und im Fahrzeug bereitgestellt. Ferner erfassen Sensoren die Masse $m$ der Fahrzeuge 31, 32, etwa anhand von Matten zur Detektion von Passagieren. Der Rollkoeffizient $f_R$ kann für ein Fahrzeug 31, 32 oder einzelne Räder der Fahrzeuge 31, 32 bekannt sein und gegebenenfalls an die Umstände angepasst werden, etwa unter Berücksichtigung von einem Abrieb der Reifen, dem aktuellen Straßenbelag und/oder den Witterungseinflüssen. Zur Berechnung des Steigungswiderstands $F_{St}$ wird eine Steigung $\alpha$ bei der Fahrt des Fahrzeugs 31, 32 erfasst, beispielsweise durch Messen der Neigung des Fahrzeugs 31, 32, der Fahrbahn oder anhand von Kartendaten. Der Beschleunigungswiderstand $F_B$ kann anhand der Fahrzeugmasse $m$ und der Beschleunigung $\alpha$ ermittelt werden.

Ferner kann die Windgeschwindigkeit bestimmt werden, von der die Erhöhung des Energieverbrauchs abhängt. Ferner wird die Fahrbahnneigung erfasst, die ebenfalls den Energieverbrauch mitbestimmt. Es kann daher ein um die Fahrbahnneigung bereinigter Energieverbrauch bestimmt werden. Die so erfassten Werte werden an die fahrzeugexterne Einheit 4 übertragen und wie oben beschrieben verarbeitet, wobei insbesondere Windkartendaten erzeugt werden.

Die genannten Verfahrensschritte, bei denen die Windrichtung $W_L$ und Windgeschwindigkeit $w_L$ anhand verschiedener Messgrößen berechnet werden können, werden bei weiteren Ausführungsbeispielen kombiniert, etwa um die Parameter $W_L$, $w_L$ des Windes genauer zu bestimmen oder eine Plausibilitätsprüfung durchzuführen. Insbesondere können anhand der Daten eines einzelnen Fahrzeugs 1 bestimmte Informationen verwendet werden, wenn nur wenige Fahrzeuge 1, 31, 32 einen geografischen Bereich befahren oder wenn die Fahrzeuge 1, 31, 32 nur wenige verschiedene Fahrtrichtungen R aufweisen. In diesem Fall kann es schwierig sein, allein anhand der Antriebsleistung in verschiedene Richtungen R die gewünschten Parameter $W_L$, $w_L$ des Windes zu berechnen. Umgekehrt kann diese Berechnung besonders genau oder effizient durchgeführt werden, wenn Daten einer Vielzahl von Fahrzeugen 1, 31, 32 zur Verfügung stehen, die sich in verschiedene Richtungen R bewegen.

Bezugszeichenliste

| 1 | Fahrzeug |
|---|---|
| 2 | Straße |
| 3 | Fahrbahnmarkierung |
| 4 | Fahrzeugexterne Einheit, Server |
| 11 | Erfassungseinheit |
| 12 | Auswertungseinheit |
| 13 | Schnittstelle |
| 31, 32 | Fahrzeug |
| 33 | Pfeil, Windrichtung |
| $A_S$ | Lenkungsverstärkung |
| $A_{quer,x}$ | Querspanfläche des Fahrzeugs (in x-Richtung) |
| $A_{quer,y}$ | Querspanfläche des Fahrzeugs (in y-Richtung) |
| $C_{\alpha H}$ | Schräglaufsteifigkeit der Hinterachse |
| $C_{\alpha V}$ | Schräglaufsteifigkeit der Vorderachse |
| $c_{Mz}$ | Aerodynamischer Windgiermomentbeiwert |
| $c_x$ | Aerodynamischer Windseitenkraftbeiwert (in x-Richtung) |
| $c_y$ | Aerodynamischer Windseitenkraftbeiwert (in y-Richtung) |
| $DP$ | Druckpunkt |
| $e_{SP}$ | Abstand zwischen Druckpunkt $DP$ und Fahrzeugschwerpunkt SP |
| $F_x$ | Gegenkraft in Fahrtrichtung |
| $F_R$ | Rollwiderstand |
| $F_B$ | Beschleunigungskraft |
| $F_{St}$ | Steigungskraft |
| $F_L$ | Seitliche Luftkraft |
| $F_{L,x}$ | x-Komponente der seitlichen Luftkraft |
| $F_{L,y}$ | y-Komponente der seitlichen Luftkraft |
| $i_L$ | Lenkübersetzung |
| $l$ | Fahrzeuglänge |
| $l_H$ | Abstand der Hinterachse zum Fahrzeugschwerpunkt SP |
| $l_V$ | Abstand der Vorderachse zum Fahrzeugschwerpunkt SP |
| $M_{Lz}$ | Windgiermoment, Lenkmoment |
| R | Fahrtrichtung |
| $SP$ | Fahrzeugschwerpunkt |
| $v_F, v_{F,1}, v_{F,2}$ | Fahrzeuggeschwindigkeit |
| $v_{gegen}$ | Gegenwindgeschwindigkeit |
| $v_L$ | Effektive Windgeschwindigkeit, resultierende Anströmgeschwindigkeit |
| $v_{L,x}$ | Komponente der effektiven Windgeschwindigkeit parallel zur Fahrtrichtung R |
| $v_{L,y}$ | Komponente der effektiven Windgeschwindigkeit senkrecht zur Fahrtrichtung R |
| $W_L$ | Windrichtung |
| $w_L$ | Windgeschwindigkeit |
| $w_{L,x}$ | x-Komponente der Windgeschwindigkeit |
| $w_{L,x,1}, w_{L,x,2}$ | Komponente der Windgeschwindigkeit gegen Fahrtrichtung |
| $w_{L,y}$ | y-Komponente der Windgeschwindigkeit |
| $x$ | x-Achse, Richtung der Fahrzeuglängsachse |
| $y$ | y-Achse, Richtung senkrecht zur Fahrzeuglängsachse |
| $\gamma_L$ | Winkel der Windrichtung |
| $\delta_L$ | Lenkradeinschlagswinkel |
| $\rho_L$ | Dichte der Luft |
| $\tau_L$ | Anströmwinkel |

**Patentansprüche**

1. Verfahren zum Erfassen eines auf ein Fahrzeug (1) einwirkenden Windes, bei dem Längs- und Quersteuerungsdaten des Fahrzeugs (1) erfasst werden; und anhand der Längs- und Quersteuerungsdaten eine Windgeschwindigkeit ($w_L$) und eine Windrichtung ($W_L$) des Windes bestimmt werden.

2. Verfahren gemäß Anspruch 1,

**dadurch gekennzeichnet, dass**
die erfassten Längs- und Quersteuerungsdaten des Fahrzeugs (1) einen Lenkradeinschlagswinkel ($\delta_L$), ein Lenkmoment ($M_{L,z}$) und eine Fahrzeuggeschwindigkeit ($v_F$) umfassen.

3. Verfahren gemäß einem der vorhergehenden Ansprüche,
**dadurch gekennzeichnet, dass**

die erfassten Längs- und Quersteuerungsdaten des Fahrzeugs (1) eine Antriebsleistung und eine Fahrtrichtung (R) umfassen und
ferner eine Fahrbahnneigung erfasst und bei der Bestimmung der Windgeschwindigkeit ($w_L$) und der Windrichtung ($W_L$) berücksichtigt wird.

4. Verfahren gemäß einem der vorhergehenden Ansprüche,
**dadurch gekennzeichnet, dass**

eine Position zumindest eines weiteren Fahrzeugs in der Umgebung des Fahrzeugs (1) erfasst wird und
die Windgeschwindigkeit ($w_L$) und Windrichtung ($W_L$) des Windes ferner anhand der erfassten Position des weiteren Fahrzeugs bestimmt werden.

5. Verfahren gemäß einem der vorhergehenden Ansprüche,
**dadurch gekennzeichnet, dass**
externe Wetterdaten empfangen und die Windgeschwindigkeit ($w_L$) und Windrichtung ($W_L$) des Windes ferner anhand der externen Wetterdaten bestimmt werden.

6. Verfahren gemäß einem der vorhergehenden Ansprüche,
**dadurch gekennzeichnet, dass**
eine Position des Fahrzeugs (1) bestimmt wird;
anhand der erfassten Längs- und Quersteuerungsdaten ortsbezogene Winddaten mit einer Windrichtung ($W_L$), einer Windgeschwindigkeit ($w_L$) und einer Position erzeugt und ausgegeben werden.

7. Verfahren gemäß Anspruch 6,
**dadurch gekennzeichnet, dass**
die ortsbezogenen Winddaten an eine fahrzeugexterne Einheit (4) übertragen und dort gespeichert werden.

8. Verfahren gemäß Anspruch 7,
**dadurch gekennzeichnet, dass**
das Verfahren durch eine Vielzahl von Fahrzeugen ausgeführt wird.

9. Verfahren gemäß Anspruch 7 oder 8,
**dadurch gekennzeichnet, dass**
durch die fahrzeugexterne Einheit (4) anhand der gespeicherten Winddaten Windkartendaten erzeugt und bereitgestellt werden.

10. Verfahren gemäß Anspruch 9,
**dadurch gekennzeichnet, dass**
die Windkartendaten Informationen über einen Wind an einer Position umfassen, die von dem Fahrzeug (1) entfernt ist.

11. Verfahren gemäß einem Ansprüche 7 bis 10,
**dadurch gekennzeichnet, dass**
die fahrzeugexterne Einheit (4) anhand der ortsbezogenen Winddaten eine Windprognose erstellt.

12. Verfahren gemäß einem der vorhergehenden Ansprüche,
**dadurch gekennzeichnet, dass**
anhand der bestimmten Windgeschwindigkeit ($w_L$) und Windrichtung ($W_L$) des Windes ein Energiebedarf des Fahrzeugs (1) bestimmt wird.

13. System zum Erfassen eines auf ein Fahrzeug (1) einwirkenden Windes, umfassend

eine Erfassungseinheit (11) zum Erfassen von Längs- und Quersteuerungsdaten des Fahrzeugs (1); und
eine Auswertungseinheit (12) zum Bestimmen einer Windgeschwindigkeit ($w_L$) und einer Windrichtung ($W_L$) des Windes anhand der Längs- und Quersteuerungsdaten.

14. System gemäß Anspruch 13,
**dadurch gekennzeichnet, dass**
die erfassten Längs- und Quersteuerungsdaten des Fahrzeugs (1) einen Lenkradeinschlagswinkel ($\delta_L$), ein Lenkmoment ($M_{L,z}$) und eine Fahrzeuggeschwindigkeit ($v_F$) umfassen.

15. System gemäß Anspruch 13 oder 14,
**dadurch gekennzeichnet, dass**

die Erfassungseinheit ferner dazu eingerichtet ist, eine Fahrzeugposition zu erfassen; und
die Auswertungseinheit (12) dazu eingerichtet ist, anhand der erfassten Längs- und Quersteuerungsdaten ortsbezogene Winddaten mit einer Windrichtung ($W_L$), einer Windgeschwindigkeit ($w_L$) und einer Position zu erzeugen; wobei
ferner eine fahrzeugexterne Einheit (4) dazu eingerichtet ist, über eine datentechnische Verbindung die ortsbezogenen Winddaten von dem Fahrzeug (1) zu empfangen und zu speichern.

FIG. 1

FIG. 2A

FIG. 2B

FIG. 3

Europäisches Patentamt
European Patent Office
Office européen des brevets

# EUROPÄISCHER RECHERCHENBERICHT

**Nummer der Anmeldung**

EP 19 21 1352

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | DE 10 2017 206320 A1 (AUDI AG [DE]) 18. Oktober 2018 (2018-10-18) * Absätze [0001] - [0034], [0042] - [0046], [0058]; Abbildung 1 * ----- | 1-15 | INV. G01P5/00 G01P5/02 B60W40/02 B60W50/00 |
| Y | DE 10 2010 029245 A1 (BOSCH GMBH ROBERT [DE]) 1. Dezember 2011 (2011-12-01) * Absätze [0021] - [0033] * ----- | 1-15 | |
| Y | DE 10 2004 017638 A1 (DAIMLER CHRYSLER AG [DE]) 27. Oktober 2005 (2005-10-27) * Absätze [0013] - [0018], [0023] - [0025]; Abbildung 1 * ----- | 1-15 | |
| Y | Manfred Mitschke ET AL: "Dynamik der Kraftfahrzeuge - Seitenwindverhalten", , 12. Januar 2015 (2015-01-12), Seiten 696-712, XP055687294, Wiesbaden ISBN: 978-3-658-05068-9 Gefunden im Internet: URL:https://ebookcentral.proquest.com/lib/epo-ebooks/detail.action?docID=1965817 [gefunden am 2020-04-20] * Seite 696 - Seite 698 * ----- | 1-15 | RECHERCHIERTE SACHGEBIETE (IPC) G01P B60W |
| Y | JP 2017 210171 A (HITACHI AUTOMOTIVE SYSTEMS LTD) 30. November 2017 (2017-11-30) * Absätze [0052], [0053], [0057], [0058] * ----- | 1-15 | |

Der vorliegende Recherchenbericht wurde für alle Patentansprüche erstellt

| Recherchenort | Abschlußdatum der Recherche | Prüfer |
|---|---|---|
| München | 22. April 2020 | Felicetti, Christoph |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 19 21 1352

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-04-2020

| Im Recherchenbericht angeführtes Patentdokument | Datum der Veröffentlichung | Mitglied(er) der Patentfamilie | Datum der Veröffentlichung |
|---|---|---|---|
| DE 102017206320 A1 | 18-10-2018 | KEINE | |
| DE 102010029245 A1 | 01-12-2011 | KEINE | |
| DE 102004017638 A1 | 27-10-2005 | DE 102004017638 A1<br>WO 2005097578 A1 | 27-10-2005<br>20-10-2005 |
| JP 2017210171 A | 30-11-2017 | CN 109153384 A<br>EP 3466788 A1<br>JP 2017210171 A<br>US 2019100207 A1<br>WO 2017204006 A1 | 04-01-2019<br>10-04-2019<br>30-11-2017<br>04-04-2019<br>30-11-2017 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010039569 A1
- US 20120310536 A1
- DE 10162335 A1
- DE 102016209678 A1

- DE 102016223299 A1
- DE 102012220406 A1
- EP 2591967 A2